# EUROPÄISCHE PATENTSCHRIFT

(11) **EP 0 565 997 B1**
(45) Veröffentlichungstag und Bekanntmachung des Hinweises auf die Patenterteilung: **18.10.1995**
(21) Anmeldenummer: 93105686.5
(22) Anmeldetag: 06.04.1993
(51) Int. Cl.: F16D 65/16, F16J 3/04

(54) **Druckluftbetätigte Scheibenbremse**
Air pressure operated disc brake
Frein à disque actionné par air comprimé

(30) Priorität: 13.04.1992 DE 4212389
(43) Veröffentlichungstag der Anmeldung: 20.10.1993
(73) Patentinhaber: KNORR-BREMSE Systeme für Nutzfahrzeuge GmbH, 80809 München (DE)
(72) Erfinder: Baumgartner, Hans, W-8052 Moosburg (DE); Bieker, Dieter, W-8000 München 82 (DE); Trimpe, Robert, W-8000 München 50 (DE)
(74) Vertreter: KUHNEN, WACKER & PARTNER

(56) Entgegenhaltungen:
- EP-A- 0 139 116
- DE-A- 2 165 811
- DE-A- 3 716 202
- US-A- 4 199 159

## Beschreibung

Die Erfindung bezieht sich auf eine druckluftbetätigte Scheibenbremse gemäß dem Oberbegriff des Anspruchs 1, die insbesondere für Straßenfahrzeuge und vorzugsweise für Nutzfahrzeuge vorgesehen ist.

Druckluftbetätigte bzw. pneumatische Scheibenbremsen der gattungsgemäßen Art sind beispielsweise aus der **DE-OS 37 16 202** sowie aus der nicht vorveröffentlichten **DE-OS 40 32 885** bekannt. Bei diesen bekannten Scheibenbremsen wird eine Bremsscheibe von einem in Radialrichtung verschiebbar gelagerten Bremssattel umfaßt, wobei auf einer Seite des Bremssattels eine druckluftbetätigte Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei diesen bekannten Scheibenbremsen als Betätigungsorgan einen Drehhebel auf, der um eine zur Ebene der Bremsscheibe parallel verlaufende Drehachse schwenkbar gelagert ist. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt.

Eine einwandfreie Funktion der jeglicher Art von Umwelteinflüssen, wie insbesondere Straßenschmutz und Nässe ausgesetzten Scheibenbremse kann nur dann gewährleistet werden, wenn zumindest die beweglichen Teile der Zuspannvorrichtung vor diesen schädlichen Einflüssen zuverlässig geschützt werden. Zu diesem Zweck bildet die Zuspannvorrichtung der bekannten Scheibenbremsen einen im wesentlichen allseits geschlossenen Innenraum, wobei zwischen dem Umfang jeder zum Durchführen der jeweiligen Stellspindel vorgesehenen Durchgangsöffnung und dem Umfang des Druckstücks eine elastische Dichtung angeordnet ist, bei der es sich meist um einen Faltenbalg handelt. Hierdurch wird erreicht, daß der Innenraum der Zuspannvorrichtung trotz der funktionsnotwendigen Durchgangsöffnungen bei jeder sich in Abhängigkeit vom Belagverschleiß ändernden Nachstellposition der Stellspindel(n) zuverlässig abgedichtet ist.

Ein derartiger Faltenbalg ist aber beispielsweise beim Auswechseln der Bremsbacken der Gefahr von Beschädigungen ausgesetzt. So ist es ohne weiteres möglich, daß ein abgleitender Schraubenzieher oder anderes Montagewerkzeug den Faltenbalg so stark beschädigt, daß Schmutz oder Feuchtigkeit in den Innenraum der Nachstellvorrichtung eindringen kann. Eine solche, meist vergleichsweise winzige Beschädigung des Faltenbalgs wird jedoch sehr leicht vom Wartungspersonal übersehen. Als Folge davon dringt in das Innere der Zuspannvorrichtung fortan Schmutz und Feuchtigkeit ein, so daß die hochempfindlichen beweglichen Teile, wie insbesondere die Gewindeführung der Stellspindel, allmählich so stark verschmutzen oder korrodieren, daß die Stellspindel schließlich nicht mehr gedreht werden kann, so daß letztlich die Verschleißnachstellung der Scheibenbremse ausfällt; dies hat unweigerlich einen Totalausfall der Scheibenbremse und damit ein Bremsversagen zur Folge.

Der Erfindung liegt die Aufgabe zugrunde, eine druckluftbetätigte Scheibenbremse gemäß dem Oberbegriff des Anspruchs 1 derart weiterzubilden, daß selbst bei einer unsachgemäß durchgeführten Wartung ein Bremsversagen weitgehend vermieden werden kann.

Diese Aufgabe wird erfindungsgemäß mit dem im Kennzeichnungsteil des Anspruchs 1 angegebenen Maßnahmen gelöst.

Erfindungsgemäß ist demzufolge zwischen der Traverse und dem Umfang jeder Durchgangsöffnung der Nachstellvorrichtung eine zusätzliche Dichtung angeordnet. Hierdurch wird erreicht, daß bei einer Beschädigung des äußeren Faltenbalgs von den funktionsnotwendigen beweglichen Teilen der Nachstellvorrichtung lediglich die bereits ausgefahrenen Bereiche des Außengewindes der Stellspindel verschmutzen oder verrosten können, während alle übrigen Teile, wie insbesondere die im Innenraum der Nachstellvorrichtung befindlichen Bereiche der Stellspindel weiterhin geschützt sind und somit ihre volle Funktionsfähigkeit behalten. Eine sichere Verschleißnachstellung ist folglich weiterhin gewährleistet, so daß ein Totalausfall der Scheibenbremse vermieden werden kann. Lediglich beim nächsten Belagwechsel ist ggf. ein Austausch der Stellspindeln gegen ein Ersatzteil oder eine Reinigung ihres Außengewindes erforderlich, was im Vergleich zu den bei einem Ausfall der Bremsen möglichen Folgen ein vernachlässigbarer Faktor ist.

Gemäß der im Anspruch 2 angegebenen Weiterbildung der Erfindung wird die zusätzliche Dichtung als elastische Membran ausgebildet, die gemäß Anspruch 3 vorzugsweise im wesentlichen ringförmig ist und traversenseitig an einer am bremsscheibenseitigen Ende der Traverse ausgebildeten, die zugeordnete Stellspindel im wesentlichen kreisförmig umgebenden Ringschulter befestigt wird; hierdurch ist eine einfache und zugleich sehr dichte Befestigung gewährleistet.

Am Umfang der zugeordneten Durchgangsöffnung wird die zusätzliche Dichtung gemäß Anspruch 4 vorteilhaft in einer im wesentlichen ringförmigen Ausnehmung der Umfangsfläche befestigt, wobei diese ringförmige Ausnehmung gemäß Anspruch 5 zweckmäßig zur gleichzeitigen Befestigung des Faltenbalgs herangezogen werden kann. Hierbei kann der Faltenbalg gemäß Anspruch 6 mittels einer Spreizklemme derart in der ringförmigen Ausnehmung befestigt werden, daß gleichzeitig eine Klemmbefestigung für die zusätzliche Dichtung erzielbar ist. An der Ringschulter der Traverse wird die zusätzliche Dichtung gemäß Anspruch 7 vorzugsweise mittels eines Klemmrings befestigt, der bevorzugt durch einen am Umfangsende der zusätzlichen Dichtung befestigten, in derem Material eingebetteten Metallring gebildet wird, dessen Durchmesser so gewählt wird, daß sich an der Ringschulter ein Preßsitz ergibt.

Gemäß einem weiteren, im kennzeichnenden Teil des Anspruchs 9 angegebenen Aspekt der Erfindung kann es von Vorteil sein, wenn am bremsscheibenseitigen Austritt jeder Stellspindel aus dem betreffenden Innengewinde der Traverse eine umlaufenden Dichtung vorgesehen wird. Hierdurch wird nämlich erreicht, daß bei einer etwaigen Beschädigung des äußeren Faltenbalgs zusätzlich die - bei entsprechend großem Gewindespiel - gegebenenfalls von dieser Seite her noch zugänglichen Bereiche des Stellgewindes sicher abgedichtet werden, so daß die Nachstellvorrichtung unter allen Umständen ihre volle Funktionsfähigkeit behält. Falls aufgrund der Anordnung der Traverse innerhalb der Zuspannvorrichtung im übrigen damit gerechnet werden kann, daß keine nenneswerte Menge an Schmutz oder Feuchtigkeit zu den weiter innen befindlichen beweglichen Teilen gelangen kann, ist es u.U. möglich, daß eine derartige umlaufende Dichtung auch ohne die im Anspruch 1 angegebene Maßnahme zum Aufrechterhalten der Funktionsfähigkeit der Zuspannvorrichtung ausreichend ist.

Bei Verwendung einer derartigen umlaufenden Dichtung wird diese bevorzugt als Dichtlippe ausgebildet, die zusammen mit der jeweils zugeordneten zusätzlichen Dichtung eine Einheit bildet, so daß die Montage erleichtert wird und die Herstellungskosten entsprechend gering sind.

Die Erfindung wird nachstehend anhand der Beschreibung von Ausführungsbeispielen unter Bezugnahme auf die Zeichnung näher erläutert. Es zeigen:
**Fig. 1** anhand eines Querschnitts den schematischen Aufbau der Zuspannvorrichtung;
**Fig. 2** einen Längsschnitt der in Fig. 1 gezeigten Zuspannvorrichtung;
**Fig. 3 und 4** jeweils vergrößerte Details der Fig.2 zur Erläuterung des Aufbaus und der Lage der zusätzlichen Dichtung; und
**Fig. 5A und 5B** jeweils vergrößerte Details der Fig.4 zur Erläuterung des Aufbaus und der Lage einer zusätzlichen Dichtlippe.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der zuspannvorrichtung zwei Spindeln aufweist, sei darauf hingewiesen, daß die Erfindung selbstverständlich auch bei einer einspindeligen Zuspannvorrichtung verwendbar ist.

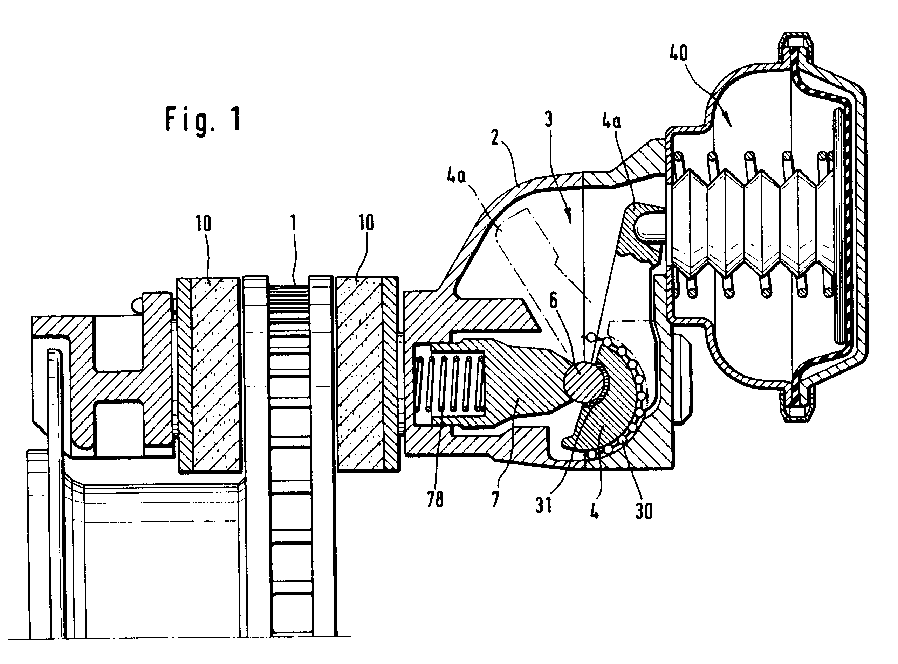

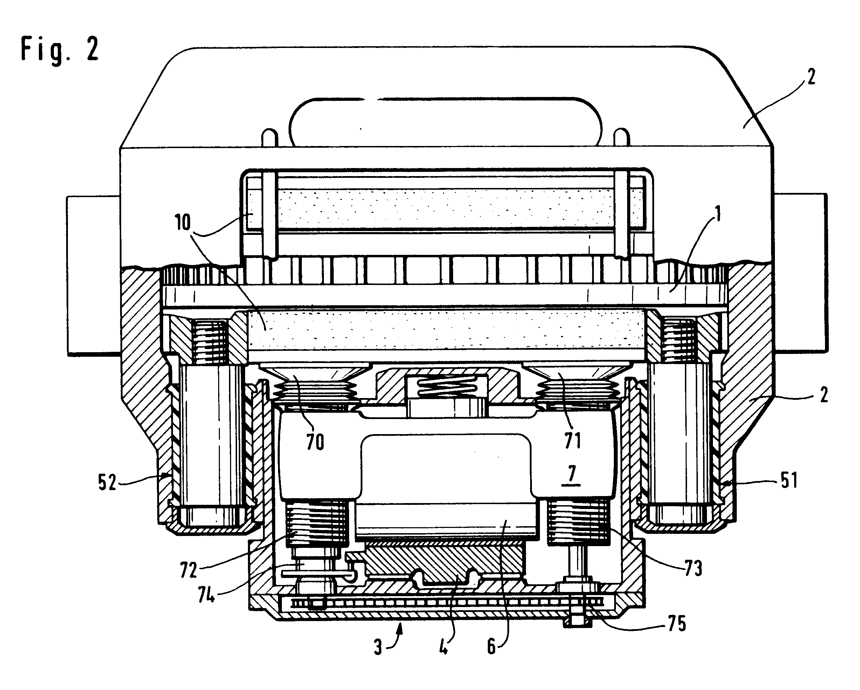

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der verfügbare Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

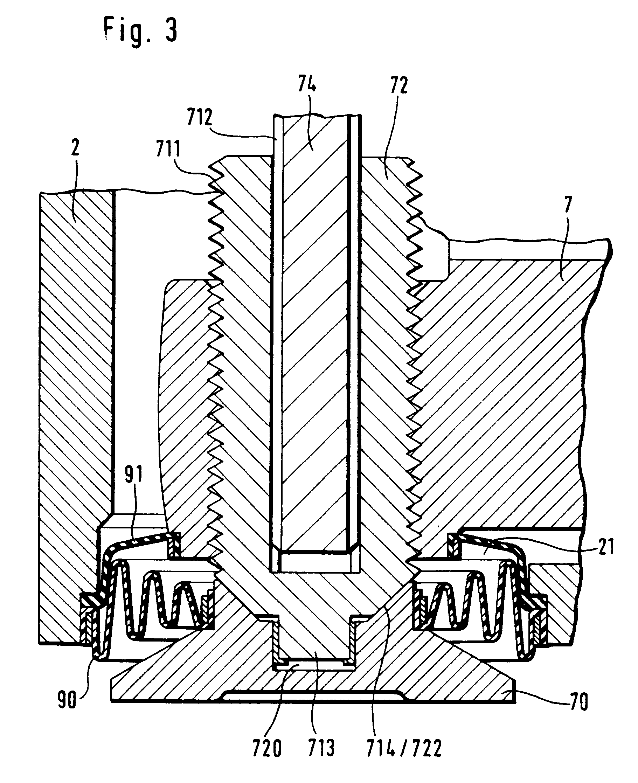

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht.

Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird.

Falls ein zu großes Lüftspiel vorliegt, was beispielsweise nach einem Belagwechsel oder bei zunehmendem Verschleiß der Bremsbacken der Fall ist, sorgt die Nachstelleinrichtung 74 dafür, daß sich die Stellspindeln 72 und 73 solange drehen, bis das Lüftspiel seinen Sollwert erreicht. Auf diese Weise ist gewährleistet, daß die Scheibenbremse bis zum vollständigen Abrieb der Bremsbacken 10 funktionsfähig bleibt.

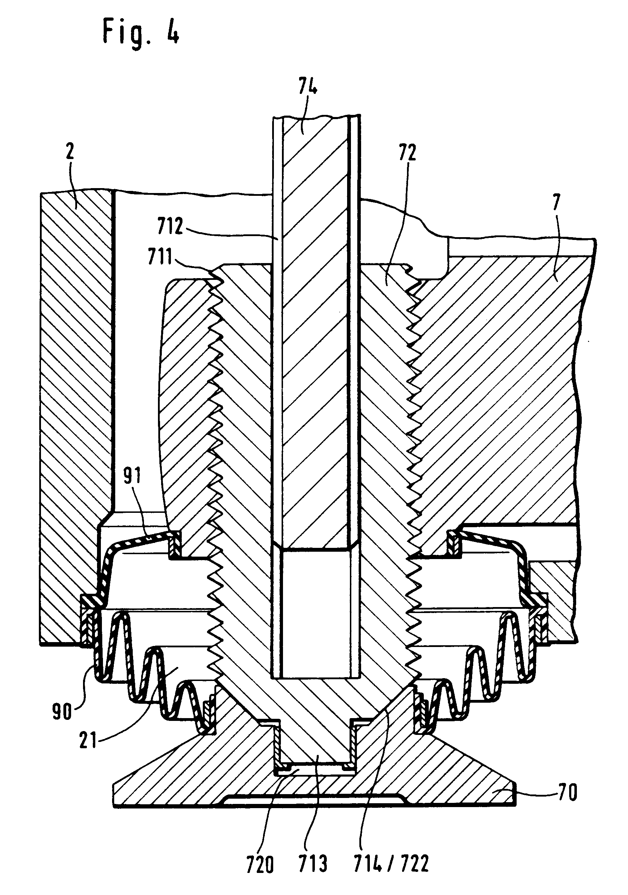

Die Fig.3 und 4 zeigen jeweils einen vergroßerten Ausschnitt der Fig.2, wobei Fig.3 den Fall darstellt, daß die Bremsbeläge noch neu sind und demgemäß ihre volle Belagstärke aufweisen; die gezeigte Stellspindel 72 ist folglich nahezu völlig in die Traverse 7 eingeschraubt bzw. befindet sich im "eingefahrenen" Zustand. Demgegenüber zeigt Fig.4 den Zustand bei mittlerem Verschleiß der Bremsbeläge, bei dem die Stellspindel infolge der entsprechend verringerten Belagstärke von der (lediglich schematisch angedeuteten) Nachstelleinrichtung 74 um eine dementsprechende Wegstrecke aus dem Innengewinde der Traverse 7 herausgedreht wurde. Aus einem Vergleich der Fig.3 und 4 wird deutlich, daß ein eine Durchgangsöffnung 21 abdichtender Faltenbalg 90 durch entsprechende Ausfaltung ohne weiteres in der Lage ist, sich dem sich ändernden Öffnungsverhältnis der Durchgangsöffnung 21 anzupassen.

Der Faltenbalg 90 ist einenends mittels z.B. eines verschraubbaren Klemmrings (der nach Art einer Schlauchschelle geformt sein kann) an einer ringförmigen Ausnehmung des Druckstücks 70 befestigt, das seinerseits mit der Stellspindel 72 über konusförmige Stützflächen 714 bzw. 722 und einen Zapfen 713 lösbar gekoppelt ist, da der Zapfen 713 unter Zwischenschaltung einer federförmigen Klemmeinrichtung, die in der Figur lediglich schematisch angedeutet ist, in eine zugeordnete Ausnehmung 720 des Druckstücks 70 eingreift. Andernends ist der Faltenbalg 90 in einer im wesentlichen ringförmigen Ausnehmung der Umfangsfläche der Durchgangsöffnung 21 beispielsweise mittels einer Spreizklemme befestigt. Die Befestigung des Faltenbalgs 90 kann alternativ auch dadurch erfolgen, daß am jeweiligen Ende des Faltenbalgs 90 ein Metallring befestigt wird, dessen Durchmesser geringfügig kleiner (druckstückseitige Befestigung) bzw. geringfügig größer (traversenseitige Befestigung) als der Außenumfang des Drucktücks bzw. der Innenumfang der Ausnehmung der Umfangsfläche der Durchgangsöffnung 21 ist. In diesem Fall kann die Montage des Faltenbalgs äußerst leicht durch einen Steckvorgang erfolgen; vorzugsweise wird ein derartiger Metallring im Material des Faltenbalgs 90 bereits bei dessen Herstellung ausgebildet, so daß gleichzeitig ein Korrosionsschutz des Metallrings erzielt wird.

Erfindungsgemäß ist eine zusätzliche Dichtung 91 vorgesehen, die so angeordnet ist, daß sie sich, wie aus den Fig.3 und 4 unmittelbar ersichtlich ist, zwischen der Traverse 7 und dem Umfang der Durchgangsöffnung 21 erstreckt. Da die Befestigung der zusätzlichen Dichtung 91 traversenseitig so gewählt ist, daß das entsprechende Ende der Dichtung 91 den unteren Austritt des Innengewindes für die Stellspindel 72 in enger Nachbarschaft umgibt, wird folglich erreicht, daß selbst bei einer Beschädigung des Faltenbalgs 91 keinerlei Schmutz oder Feuchtigkeit in die korrosionsempfindlichen Bereiche des Innenraums der Zuspannvorrichtung gelangen kann; lediglich diejenigen Bereiche des Außengewindes der Stellspindel 72, die sich in Abhängigkeit vom Belagverschleiß bereits außerhalb des Innengewindes der Traverse 7 befinden, sind dem über den Faltenbalg 90 eindringenden Schmutz oder Feuchtigkeit ausgesetzt. Eine hierdurch u.U. hervorgerufene Funktionsunfähigkeit dieser Gewindebereiche macht sich jedoch erst dann bemerkbar, wenn die Stellspindel 72 beim Belagwechsel wieder zurückgeschraubt werden muß und nunmehr hemmt, so daß die Stellspindel 72 ggf. auszutauschen oder zu reinigen ist. Jedenfalls bleibt die für die sichere Funktion der Scheibenbremse unerläßliche Nachstellwirkung der Stellspindel 72 auch in diesem Fall voll erhalten, da das hier durchzuführende Herausdrehen der Stellspindel 72 auf zuvor noch innerhalb des Innengewindes befindlichen Gewindeteilen beruht, deren Funktion aufgrund der zusätzlichen Dichtung 91 nach wie vor nicht eingeschränkt ist.

Die zusätzliche Dichtung 91 ist vorzugsweise als elastische Membran ausgebildet, deren Elastizität mindestens so groß gewählt wird, daß der beim Bremsen bzw. Zuspannen auftretende Hub der Traverse 7 kompensiert werden kann; dieser beträgt jedoch nur einige Millimeter und stellt somit keinerlei Problem dar.

Wie aus den Fig.3 und 4 deutlich hervorgeht, ist die elastische Membran 91 im wesentlichen ringförmig und mit ihrem einen Ende an einer entsprechend geformten Ringschulter der Traverse 7 befestigt, die im wesentlichen ringförmig und am bremsscheienzugewandten Ende der Traverse 7 so ausgebildet ist, daß sie das Innengewinde für die Stellspindel 72 in ausreichendem Abstand umgibt. Zur Befestigung kann ein Klemmring oder auch eine andere geeignete Schraub-Klemmverbindung verwendet werden. Jedoch ist es ebenfalls möglich, an diesem Ende der Membran 91, ggf. integral im Inneren des Mambranmaterials, einen Metallring mit geeignet reduziertem Durchmesser auszubilden, so daß die Befestigung montagefreundlich durch einen Preßsitz erfolgen kann.

Das andere Ende der Membran 91 ist vorzugsweise in der für den Faltenbalg 90 vorgesehenen Ausnehmung der Umfangsfläche der Durchgangsöffnung 21 befestigt. Diese Anordnung hat neben der Ersparnis für die Herstellungskosten einer zusätzlichen Ausnehmung den Vorteil, daß die Membran 91 zusammen mit dem Faltenbalg 90 mittels eines einzigen Spreizklemmrings befestigt werden kann, so daß der Zusammenbau wesentlich erleichtert ist. Falls im Material des Faltenbalgs 90, wie oben erläutert, ein Metallring integral ausgebildet ist, so kann die Befestigung der Membran 91 auf einfache Weise dadurch erfolgen, daß dieses Ende der Membran 91 einfach in die Ausnehmung eingesetzt wird, worauf der Faltenbalg 90 eingepreßt wird und dadurch gleichzeitig für einen sicheren Halt der Membran 91 sorgt.

Im übrigen kann jede andere geeignete Befestigung für die Membran 91 vorgesehen werden, beispielsweise mittels entsprechender Nuten oder Umlaufkanten am Umgebungsbereich des Durchgangslochs oder der Traverse 7, solange hierdurch ein fester und dichter Sitz gewährleistet ist.

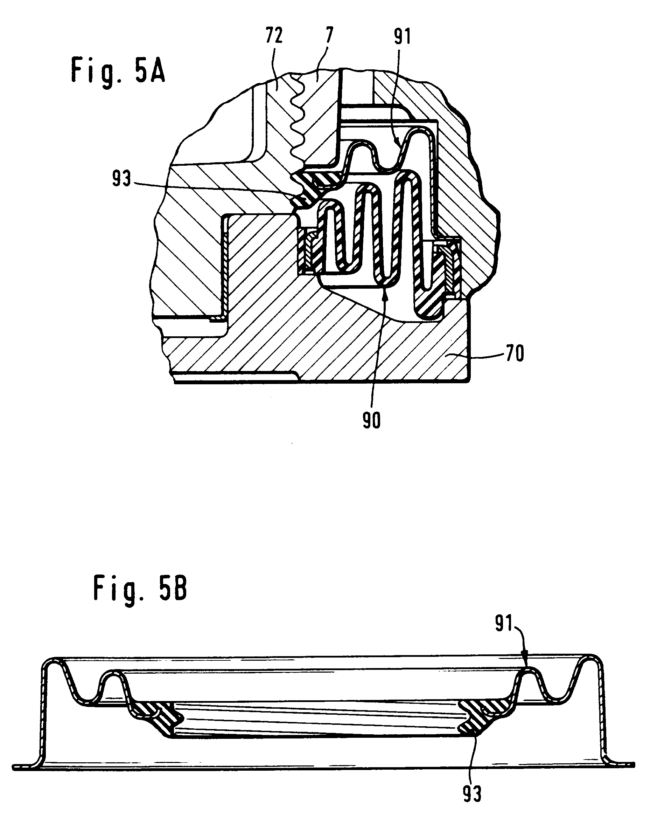

Um sicher zu verhindern, daß bei dem unterstellten Fall einer Beschädigung des Faltenbalgs 90 auch die über den bremsscheibenseitigen Austritt der Stellspindeln zugänglichen Gewindebereiche des Stellgewindes nicht der Gefahr der Verschmutzung oder Korrosion ausgesetzt sind, ist es nach einer Weiterbildung der Erfindung gemäß der Darstellung in den Fig.5A und 5B möglich, am jeweiligen Austritt der Stellspindel 72 bzw. 73 eine umlaufende Dichtung beispielsweise in Form einer Dichtlippe 93 anzuordnen. Diese kann, wie dies in den Figuren angedeutet ist, zusammen mit der Membran 91 eine integral bzw. einstückig geformte Dichtungseinheit bilden, wodurch sowohl der Montageaufwand als auch die Herstellungskosten verringert werden können. Der dem Außengewinde der betreffenden Stellspindel zugewandte Bereich der Dichtlippe 93 sollte selbstverständlich so elastische verformbar sein, daß die erforderliche Leichtgängigkeit des Gewindes bei ausreichend hoher Dichtigkeit gewährleistet ist.

Für den Fall, daß zwischen der Traverse 7 und dem sie umgebenden Innenbereich der Zuspannvorrichtung 3 nur ein sehr enger Spalt gebildet wird und demzufolge lediglich eine geringe oder kaum nenneswerte Menge an Schmutz oder Feuchtigkeit zu den weiter innen befindlichen beweglichen Teilen gelangen kann, kann gegebenenfalls erwogen werden, die umlaufende Dichtlippe 93 ohne die zusätzliche Membran 91 vorzusehen und dennoch die volle Funktionsfähigkeit der Zuspannvorrichtung aufrecht zu erhalten. Jedoch wird in der Praxis in der Regel der zusätzlichen Membran 91 eine größere Bedeutung für die Dichtigkeit des Gehäuses der Zuspannvorrichtung 3 zukommen als der Dichtlippe 93.

Der Faltenbalg 90, die zusätzliche Membran 91 sowie die Dichtlippe 93 werden vorzugsweise aus einem Material hergestellt, das witterungsunempfindlich und ggf. säurebeständig ist, so daß ein langzeitlicher Schutz gewährleistet ist.

## Patentansprüche

1. Druckluftbetätigte Scheibenbremse mit einem eine Bremsscheibe (*1*) umfassenden Bremssattel (*2*), auf dessen einer Seite eine Zuspannvorrichtung (*3*) mit einem schwenkbar gelagerten Drehhebel (*4*, *4a*) angeordnet ist, der mittels eines Exzenters (*6*) an einer sich parallel zur Drehachse (*25*) erstreckenden Traverse (*7*) anliegt, die bezüglich der Bremsscheibe (*1*) verschiebbar geführt ist und in der mindestens eine Stellspindel (*72*, *73*) verstellbar verschraubt ist, die über ein an ihrem bremsscheibenseitigen Ende sitzendes Druckstück (*70*, *71*) auf eine zuspannseitig im Bremssattel (*2*) bezüglich der Bremsscheibe (*1*) verschiebbar gelagerte Bremsbacke (*10*) einwirkt, wobei die Zuspannvorrichtung (*3*) einen allseits geschlossenen Innenraum bildet und wobei sich zwischen dem Umfang jeder zum Durchführen der jeweiligen Stellspindel (*72*, *73*) vorgesehenen Durchgangsöffnung (*21*) im Bremssattel (2), und dem Umfang des Druckstücks (*70*, *71*) eine elastische Dichtung (*90*) erstreckt,
***dadurch gekennzeichnet,***
daß sich zwischen der Traverse (*7*) und dem Umfang jeder Durchgangsöffnung (*21*) eine zusätzliche Dichtung (*91*) erstreckt.

2. Druckluftbetätigte Scheibenbremse nach Anspruch 1, ***dadurch gekennzeichnet,*** daß jede zusätzliche Dichtung als elastische Membran (*91*) ausgebildet ist.

3. Druckluftbetätigte Scheibenbremse nach Anspruch 1 oder 2, ***dadurch gekennzeichnet***, daß jede zusätzliche Dichtung (*91*) im wesentlichen ringförmig ist und traversenseitig an einer am bremsscheibenseitigen Ende der Traverse (*7*) ausgebildeten, die zugeordnete Stellspindel (*70*, *71*) im wesentlichen kreisförmig umgebenden Ringschulter befestigt ist.

4. Druckluftbetätigte Scheibenbremse nach Anspruch 3, ***dadurch gekennzeichnet***, daß jede zusätzliche Dichtung (*91*) am Umfang der zugeordneten Durchgangsöffnung (*21*) in einer im wesentlichen ringförmigen Ausnehmung der Umfangsfläche befestigt ist.

5. Druckluftbetätigte Scheibenbremse nach Anspruch 4, ***dadurch gekennzeichnet,*** daß die ringförmige Ausnehmung der Umfangsfläche zur gleichzeitigen Befestigung der als Faltenbalg ausgebildeten erstgenannten Dichtung (*90*) und der zusätzlichen Dichtung (*91*) vorgesehen ist.

6. Druckluftbetätigte Scheibenbremse nach Anspruch 5, ***dadurch gekennzeichnet***, daß der Faltenbalg (*90*) mittels einer Spreizklemme derart in der ringförmigen Ausnehmung befestigt ist, daß gleichzeitig eine Klemmbefestigung für die zusätzliche Dichtung (*91*) erzielbar ist.

7. Druckluftbetätigte Scheibenbremse nach einem der Ansprüche 3 bis 6, ***dadurch gekennzeichnet,*** daß jede zusätzliche Dichtung (*91*) an der Ringschulter mittels eines Klemmrings befestigt ist.

8. Druckluftbetätigte Scheibenbremse nach Anspruch 7, ***dadurch gekennzeichnet*****,** daß der Klemmring durch einen am Umfangsende der zusätzlichen Dichtung (*91*) befestigten, vorzugsweise in derem Material eingebetteten Metallring gebildet ist, dessen Durchmesser so gewählt ist, daß sich an der Ringschulter ein Preßsitz ergibt.

9. Druckluftbetätigte Scheibenbremse nach einem der Ansprüche 1 bis 8, ***dadurch gekennzeichnet,*** daß am bremsscheibenseitigen Austritt jeder Stellspindel (*72*, *73*) aus dem betreffenden Innengewinde der Traverse (*7*) eine umlaufende Dichtung (*93*) sitzt.

10. Druckluftbetätigte Scheibenbremse nach Anspruch 9, ***dadurch gekennzeichnet,*** daß die umlaufende Dichtung (*93)* als Dichtlippe ausgebildet ist.

11. Druckluftbetätigte Scheibenbremse nach Anspruch 9 oder 10, ***dadurch gekennzeichnet***, daß die umlaufende Dichtung (*93*) zusammen mit der zugeordneten zusätzlichen Dichtung (*91*) eine Einheit bildet.

## Claims

1. Compressed-air-actuated disc brake having a brake caliper (2) including a brake disc (1), on one side of which caliper there is disposed a clamping device (3) having a pivotably mounted rotary lever (4, 4a) which, by means of a cam (6), abuts a cross-piece (7) extending parallel to the axis of rotation (25), which cross-piece is guided movably with respect to the brake disc (1) and in which there is adjustably screwed at least one adjustment spindle (72, 73) which, by means of a pressure piece (70, 71) located at its end on the brake disc side, acts on a brake pad (10) mounted movably with respect to the brake disc (1) on the clamping side in the brake caliper (2), the clamping device (3) forming an inner chamber closed all round, and an elastic seal (90) extending between the circumference of each passage opening (21) in the brake caliper (2) provided for guiding through the respective adjustment spindle (72, 73), and the circumference of the pressure piece (70, 71), characterised in that between the cross-piece (7) and the circumference of each passage opening (21) there extends an additional seal (91).

2. Compressed-air-actuated disc brake according to claim 1, characterised in that each additional seal is constructed as an elastic diaphragm (91).

3. Compressed-air-actuated disc brake according to claim 1 or 2, characterised in that each additional seal (91) is substantially annular and is secured at the cross-piece side on an annular shoulder constructed at the end of the cross-piece (7) on the brake disc side and surrounding the associated adjustment spindle (70, 71) in a substantially circular manner.

4. Compressed-air-actuated disc brake according to claim 3, characterised in that each additional seal (91) is secured on the circumference of the associated passage opening (21) in a substantially annular recess of the circumferential surface.

5. Compressed-air-actuated disc brake according to claim 4, characterised in that the annular recess of the circumferential surface is provided for the simultaneous securing of the first-mentioned seal (90) constructed as a bellows, and the additional seal (91).

6. Compressed-air-actuated disc brake according to claim 5, characterised in that the bellows (90) is secured in the annular recess by means of a spreading clamp in such a way that a clamping securement for the additional seal (91) can be achieved at the same time.

7. Compressed-air-actuated disc brake according to one of claims 3 to 6, characterised in that each additional seal (91) is secured on the annnular shoulder by means of a clamping ring.

8. Compressed-air-actuated disc brake according to claim 7, characterised in that the clamping ring is formed by a metal ring secured at the circumferential end of the additional seal (91), preferably embedded in its material, the diameter of this ring being selected so that a press fit is produced on the annular shoulder.

9. Compressed-air-actuated disc brake according to one of claims 1 to 8, characterised in that at the brake disc side exit of each adjustment spindle (72, 73) out of the relevant inner thread of the cross-piece (7) there is located an encircling seal (93).

10. Compressed-air-actuated disc brake according to claim 9, characterised in that the encircling seal (93) is constructed as a sealing lip.

11. Compressed-air-actuated disc brake according to claim 9 or 10, characterised in that the encircling seal (93) forms a unit together with the associated additional seal (91).

## Revendications

1. Frein à disque actionné par air comprimé comportant un étrier de frein (2), qui entoure un disque de frein (1) et sur un côté duquel est disposé un dispositif de serrage (3) comportant un levier tournant (4,4a) monté de manière à pouvoir tourner et qui s'applique, au moyen d'un excentrique (6), à une traverse (7) qui s'étend parallèlement à l'axe de rotation (25) et qui est guidée de manière à pouvoir coulisser par rapport au disque de frein (1) et dans laquelle est vissée de manière réglable au moins une broche de réglage (72,73), qui agit par l'intermédiaire d'un élément de compression (70,71), qui prend appui sur l'extrémité de la broche située du côté du disque de frein, sur une mâchoire de frein (10) qui est montée coulissante, du côté serrage, dans l'étrier de frein (2) par rapport au disque de frein (1), le dispositif de serrage (3) formant un espace intérieur fermé de tous côtés, et une garniture d'étanchéité élastique (90) s'étendant entre la périphérie de chaque ouverture de passage (21), qui est aménagée dans l'étrier de frein (2) et sert au passage de la broche respective de réglage (72,73), et la périphérie de l'élément de compression (70,72),
caractérisé par le fait qu'une garniture d'étanchéité supplémentaire (91) s'étend entre la traverse (7) et la périphérie de chaque ouverture de passage (21).

2. Frein à disque actionné par air comprimé suivant la revendication 1, caractérisé par le fait que chaque garniture d'étanchéité supplémentaire est agencée sous la forme d'une membrane élastique (91).

3. Frein à disque actionné par air comprimé suivant la revendication 1 ou 2, caractérisé par le fait que chaque garniture d'étanchéité supplémentaire (91) possède une forme essentiellement annulaire et est fixée, côté traverse, sur un épaulement annulaire, qui est formé sur l'extrémité de la traverse (7), tournée du côté du frein à disque, et qui entoure essentiellement circulairement la broche associée de réglage (70,71).

4. Frein à disque actionné par air comprimé suivant la revendication 3, caractérisé par le fait que chaque garniture d'étanchéité supplémentaire (91) est fixée, sur la périphérie de l'ouverture de passage associée (21), dans un évidement de forme essentiellement annulaire de la surface circonférentielle.

5. Frein à disque actionné par air comprimé suivant la revendication 4, caractérisé par le fait que l'évidement annulaire de la surface circonférentielle est prévu pour la fixation simultanée de la garniture d'étanchéité (90) indiquée en premier, agencée sous la forme d'un soufflet, et de la garniture d'étanchéité supplémentaire (91).

6. Frein à disque actionné par air comprimé suivant la revendication 5, caractérisé par le fait que le soufflet (90) est fixé au moyen d'une pince d'écartement dans l'évidement annulaire de telle sorte que l'on peut obtenir simultanément une fixation par serrage pour la garniture d'étanchéité supplémentaire (91).

7. Frein à disque actionné par air comprimé suivant l'une des revendications 3 à 6, caractérisé par le fait que chaque garniture d'étanchéité supplémentaire (91) est fixée sur l'épaulement annulaire au moyen d'une bague de serrage.

8. Frein à disque actionné par air comprimé suivant la revendication 7, caractérisé par le fait que la bague de serrage est formée par un anneau métallique, qui est fixé sur l'extrémité circonférentielle de la garniture d'étanchéité supplémentaire (91) et de préférence est insérée dans le matériau de cette garniture d'étanchéité et dont le diamètre est choisi de telle sorte qu'on obtient un ajustement serré sur l'épaulement annulaire.

9. Frein à disque actionné par air comprimé suivant l'une des revendications 1 à 8, caractérisé par le fait qu'une garniture d'étanchéité circonférentielle (93) est en appui sur la partie de chaque broche de réglage (72,73), qui est située du côté du disque de frein et sort du taraudage associé de la traverse (7).

10. Frein à disque actionné par air comprimé suivant la revendication 9, caractérisé par le fait que la garniture d'étanchéité circonférentielle (93) est agencée sous la forme d'une lèvre d'étanchéité.

11. Frein à disque actionné par air comprimé suivant la revendication 9 ou 10, caractérisé par le fait que la garniture d'étanchéité circonférentielle (93) forme une unité conjointement avec la garniture d'étanchéité supplémentaire associée (91).
